# EUROPEAN PATENT SPECIFICATION

(11) **EP 2 180 016 B1**
(45) Date of publication and mention of the grant of the patent: **06.06.2012**
(21) Application number: 08765587.4
(22) Date of filing: 13.06.2008
(51) Int. Cl.: C08L 33/06, C08K 5/09

(54) **METHOD OF PREPARING A CURABLE RESIN COMPOSITION**
VERFAHREN ZUR HERSTELLUNG EINER HÄRTBAREN HARZZUSAMMENSETZUNG
PROCÉDÉ DE PRÉPARATION D'UNE COMPOSITION DE RÉSINE DURCISSABLE

(30) Priority: 12.07.2007 JP 2007182817
(43) Date of publication of application: 28.04.2010
(73) Proprietor: Toagosei Co., Ltd, Minato-ku, Tokyo 105-8419 (JP)
(72) Inventor: MOCHIZUKI, Katsunobu, Nagoya-city Aichi 455-0027 (JP); KAAI, Michihiro, Nagoya-city Aichi 455-0027 (JP); YONEDA, Kotaro, Nagoya-city Aichi 455-0027 (JP)
(74) Representative: Neuefeind, Regina
(86) International application number: PCT/JP2008/060877
(87) International publication number: WO 2009/008245

(56) References cited:
- EP-A1- 1 550 701
- EP-A1- 1 624 027
- EP-A1- 1 736 511
- WO-A1-01/83619
- WO-A1-2008/059873
- JP-A- 04 057 819
- JP-A- 04 110 371
- JP-A- 04 202 554
- JP-A- 08 073 749
- JP-A- 09 012 906
- JP-A- 09 176 489
- JP-A- 2003 277 425
- JP-A- 2004 307 836

## Description

### TECHINICAL FIELD

The present invention relates to a method of preparing a room temperature curable resin composition having reduced curing delay, and more specifically to a curable resin composition suitably used for a sealing material, an adhesive for exterior tiles and the like which require high weatherability.

### BACKGROUND ART

Curable compositions containing an organic polymer having a room temperature curable reactive group are used as sealing materials or adhesives in buildings. For example, curable compositions containing as their base ingredients an oxyalkylene polymer having a hydrolyzable silyl group have good workability and balanced mechanical properties such as elongation at break and strength at break, and are widely used as building sealing materials. Such building sealing materials are required to have a high elongation at break because they are disposed within a gap in a member which elongates and contracts over time, such as a siding material or a metal curtain wall. They also need to have durability and weatherability for maintaining their performance for a long time. To satisfy such required properties, various studies have been made so far.

In a conventional art, for example, an oxyalkylene polymer having a hydrolyzable silyl group and a vinyl polymer having a hydrolyzable silyl group are used together (see, for example, Patent Document 1).

Another art discloses that a vinyl polymer having a hydrolyzable silyl group prepared by high temperature and high pressure continuous bulk polymerization has particularly superior weatherability (see, for example, Patent Document 2).

Further, a curable composition composed of a vinyl polymer having a reactive silicon group, a polyoxyalkylene polymer having a reactive silicon group, and a plasticizer containing an acrylic component is disclosed (see, for example, Patent Document 3).
Patent Document 1: Japanese Laid-Open Patent Publication No. 59-122541.
Patent Document 2: Japanese Laid-Open Patent Publication No. 2004-18748.
Patent Document 3: Japanese Laid-Open Patent Publication No. 2004-2604.

### DISCLOSURE OF THE INVENTION

### PROBLEMS TO BE SOLVED BY THE INVENTION

However, the curing speed of a curable composition containing a vinyl polymer having a hydrolyzable silyl group as in the above-mentioned arts is delayed over time in some cases. More specifically, even if such a curable composition is stored under sealed conditions, the time for completing curing may become longer when used after being stored for a long time of, for example, one month or half a year compared to using immediately after the production.

The present invention has been made in view of the above-described circumstances and an objective thereof is to provide a method of preparing a curable composition in which the delay in curing speed over time is small.

### MEANS FOR SOLVING THE PROMBLEM

According to the studies of the present inventors to solve the above-described problems, it has been found that the curing speed becomes stable over time when a compound having a specific carboxyl group is contained, and the present invention has been accomplished.

In the following, means suitable for achieving the above-described objective and the like will be described under sections. Operation and advantages unique to the corresponding means will also be described according to need.

Means 1: A method of preparing a curable resin composition comprising: preparing
a vinyl polymer (A) in which part or all of the constituent monomer units are (meth)acrylic acid ester units, the vinyl polymer (A) having a hydrolyzable silyl group by polymerizing at least a (meth)acrylic acid ester monomer at a temperature of 150°C to 300°C; and mixing the vinyl polymer (A) and
a compound (B) having a carboxyl group and having a molecular weight of 1,000 or less.

In this specification, acryl and methacryl are also collectively referred to as (meth)acryl.

According to Means 1, the vinyl polymer (A) in which part or all of the constituent monomer units are (meth)acrylic acid ester units, which vinyl polymer (A) has a hydrolyzable silyl group, functions as a base resin in a sense. The curable resin composition according to Means 1 further comprises a compound (B) having a carboxyl group and having a molecular weight of 1,000 or less. This makes it possible to maintain the curing speed a long time after the production to be little different from the curing speed immediately after the production.

Means 2: A method of preparing a curable resin composition according to claim 2.

According to Means 2, the curable resin composition contains an oxyalkylene polymer (C) having a hydrolyzable silyl group in addition to the components described in Means 1. The oxyalkylene polymer (C) having a hydrolyzable silyl group also functions as a base resin.

Means 3: A method of preparing a curable resin composition according to claim 3.

According to Means 3, the curable resin composition contains a polymer (D) containing a (meth)acrylic acid ester unit and having no hydrolyzable silyl group in addition to the components described in Means 2. The polymer (D) containing a (meth)acrylic acid ester unit and having no hydrolyzable silyl group functions as a plasticizer and improves weatherability.

Means 4: The method of preparing a curable resin composition according to Means 3, characterized in that the polymer (D) containing a (meth)acrylic acid ester unit and having no hydrolyzable silyl group is prepared by polymerizing at least a (meth)acrylic acid ester monomer at a temperature of 150°C to 300°C.

By polymerizing at a relatively high temperature as in Means 4, a polymer (D) containing a (meth)acrylic acid ester unit and having no hydrolyzable silyl group with a relatively homogeneous composition can be prepared within a relatively short time.

By polymerizing at a relatively high temperature, a vinyl polymer (A) in which part or all of the constituent monomer units are (meth)acrylic acid ester units, which vinyl polymer (A) has a hydrolyzable silyl group, with a relatively homogeneous composition can be prepared within a relatively short time.

Means 5: The method of preparing a curable resin composition according to any one of Means 1 to 4, characterized in that the compound (B) having a carboxyl group has a molecular weight of 150 or more.

When the compound (B) having a carboxyl group has a relatively small molecular weight, there is concern that the peculiar smell may adversely affect workers. In this respect, the compound (B) having a carboxyl group has a molecular weight of 150 or more according to Means 6, and thus the compound is relatively less likely to produce such a peculiar smell. Accordingly, there is no concern of adverse effects on workers.

### BEST MODE FOR CARRYING OUT THE INVENTION

### <Vinyl polymer (A) having a hydrolyzable silyl group>

The vinyl polymer (A) in which part or all of the constituent monomer units are (meth)acrylic acid ester units, which vinyl polymer (A) has a hydrolyzable silyl group, in the present invention is prepared by copolymerizing a (meth)acrylic acid ester monomer, a vinyl monomer having a hydrolyzable silyl group, and if necessary, a vinyl monomer other than (meth)acrylic acid ester, which vinyl monomer is copolymerizable with a (meth)acrylic acid ester monomer.

Specific examples of hydrolyzable silyl groups include alkoxysilyl groups such as a trimethoxysilyl group, a triethoxysilyl group, a triisopropoxysilyl group, a dimethoxymethylsilyl group, a diethoxymethylsilyl group, diisopropoxymethylsilyl group, a dimethylmethoxysilyl group, and a dimethylethoxy group.

Examples of vinyl monomers having an alkoxysilyl group include vinyl silanes such as vinyltrimethoxysilane, vinyltriethoxysilane, vinylmethyldimethoxysilane, and vinyldimethylmethoxysilane, silyl group-containing acrylic acid esters such as trimethoxysilylpropyl acrylate, triethoxysilyl propyl acrylate, and methyldimethoxysilylpropyl acrylate, silyl group-containing methacrylic acid esters such as trimethoxysilylpropyl methacrylate, triethoxysilylpropyl methacrylate, methyldimethoxysilylpropyl methacrylate, and dimethylmethoxysilylpropyl methacrylate, silyl group-containing vinyl ethers such as trimethoxysilylpropyl vinyl ether, and silyl group-containing vinyl esters such as trimethoxysilylundecanoic acid vinyl ester. Of these, for the copolymerization with (meth)acrylic acid ester and the flexibility of copolymer, methoxysilyl group- or ethoxysilyl group-containing (meth)acrylic acid esters are preferred, and methyldimethoxysilylpropyl methacrylate, trimethoxysilylpropyl methacrylate, methyldiethoxysilylpropyl methacrylate, and triethoxysilylpropyl methacrylate are more preferred. One or more of these may be used.

Specific examples of (meth)acrylic acid esters include, but are not limited to, aliphatic alkyl (meth)acrylate such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, neopentyl (meth)acrylate, 2-ethylhexyl (meth)acrylate, lauryl (meth)acrylate, stearyl (meth)acrylate, cyclohexyl (meth)acrylate, and isobornyl (meth)acrylate, heteroatom-containing (meth)acrylic acid esters such as 2-methoxyethyl (meth)acrylate, dimethylaminoethyl (meth)acrylate, chloroethyl (meth)acrylate, trifluoroethyl (meth)acrylate, and tetrahydrofurfuryl (meth)acrylate, hydroxyl group-containing (meth)acrylic acid esters such as 2-hydroxyethyl (meth)acrylate, 2-hydroxypropyl (meth)acrylate, and 4-hydroxybutyl (meth)acrylate, and epoxy group-containing (meth)acrylic acid esters such as glycidyl (meth)acrylate.

Examples of vinyl monomers other than (meth)acrylic acid ester, which vinyl monomers are copolymerizable with a (meth)acrylic acid ester monomer, include (meth)acrylic acid, styrene, α-methylstyrene, an α-olefin, a vinyl ester, and a vinyl ether.

The proportion of a (meth)acrylic acid ester monomer in the total monomers is preferably 50 parts by mass or more based on 100 parts by mass of the total monomers. When the proportion is less than 50 parts by mass, the weatherability may be deteriorated.

The proportion of a vinyl monomer having an alkoxysilyl group in the total monomers is preferably 0.1 parts by mass to 50 parts by mass based on 100 parts by mass of the total monomers. When the proportion is less than 0.1 parts by mass, curing properties may deteriorate, and when the proportion is more than 50 parts by mass, tensile properties such as elongation ratios may decrease. The proportion is more preferably 1 part by mass to 30 parts by mass.

The molecular weight of the vinyl polymer (A) in which part or all of the constituent monomer units are (meth)acrylic acid ester units, which vinyl polymer (A) has a hydrolyzable silyl group, is not particularly limited; preferably the vinyl polymer (A) has a weight average molecular weight of 1,500 to 100,000 in terms of polystyrene as measured by gel permeation chromatography (GPC). When the weight average molecular weight is less than 1,500, the weatherability may be deteriorated, and when the weight average molecular weight is more than 100,000, the composition has a high viscosity, causing poor workability when coating.

The vinyl polymer (A) in which part or all of the constituent monomer units are (meth)acrylic acid ester units, which vinyl polymer (A) has a hydrolyzable silyl group, can be prepared by polymerizing monomer by any method. Specific examples of such methods include solution polymerization in an organic solvent, suspension polymerization, emulsion polymerization, and dispersion polymerization in an aqueous medium, dispersion polymerization in a nonaqueous medium, and bulk polymerization. In solution polymerization, living radical polymerization may also be employed. Of the above-described polymerization methods, bulk polymerization is more preferred. Although the polymerization temperature is not particularly limited, it is preferable to polymerize at a relatively high temperature of 150°C to 300°C as described in the above Means 5. Systems of production include a continuous system and a batch system, and although either one may be employed, a continuous system is preferred in consideration of improved productivity.

Continuous bulk polymerization methods may be performed according to the known methods disclosed in Japanese Laid-Open Patent Publication No. 57-502171, Japanese Laid-Open Patent Publication No. 59-6207, and Japanese Laid-Open Patent Publication No. 60-215007. For example, after filling a pressurizable reactor with a solvent and setting to a predetermined temperature under pressure, a monomer mixture composed of monomers and if necessary, a polymerization solvent, is fed to the reactor at a constant feeding speed, and the resulting polymerization solution is discharged in an amount equivalent to the feeding amount of the monomer mixture. A polymerization initiator may be added to the monomer mixture according to need. The polymerization initiator is added to the monomer mixture in a proportion of 0.001 parts by mass to 2 parts by mass based on 100 parts by mass of the monomer mixture.

### <Compound (B) having a carboxyl group>

Specific examples of compounds (B) having a carboxyl group and having a molecular weight of 1,000 or less in the present invention include acetic acid, propionic acid, butyric acid, valeric acid, caproic acid, caprylic acid, capric acid, lauric acid, myristic acid, palmitic acid, stearic acid, oleic acid, linoleic acid, linolenic acid, acrylic acid, methacrylic acid, maleic acid, succinic acid, itaconic acid, dimer acid, hydrogenated dimer acid, adipic acid, azelaic acid, sebacic acid, dodecanedioic acid, phthalic acid, isophthalic acid, terephthalic acid, and trimellitic acid. One or more of these compounds may be used. Of these, compounds having a molecular weight of less than 150, such as acetic acid, propionic acid, and butyric acid have a peculiar smell as mentioned above. For that reason, compounds having a molecular weight of 150 or more, which have relatively less smell are particularly preferably used. Also, when the molecular weight is 1,000 or more, the stability of curing speed is lost. The molecular weight is more preferably 150 or more and 500 or less.

The content of the compound (B) having a carboxyl group is preferably 0.01 parts by mass or more and 10 parts by mass or less based on 100 parts by mass of the total of the vinyl polymer (A) in which part or all of the constituent monomer units are (meth)acrylic acid ester units, which vinyl polymer (A) has a hydrolyzable silyl group, the oxyalkylene polymer (C) having a hydrolyzable silyl group, and the polymer (D) containing a (meth)acrylic acid ester unit and having no hydrolyzable silyl group [note that the content of the oxyalkylene polymer (C) having a hydrolyzable silyl group and the polymer (D) containing a (meth)acrylic acid ester unit and having no hydrolyzable silyl group could be "0"]. When the content of the compound (B) is less than 0.01 parts by mass, there is concern that stabilization of curing speed with time becomes difficult. When the amount of addition of the compound (B) is more than 10 parts by mass, there is concern of lowering of elongation ratios of a cured product caused by repeated elongation and contraction. The above-described lowering of elongation ratios causes crack in the cured product. The amount of addition of the compound (B) having a carboxyl group is preferably 0.1 parts by mass or more and 1.0 part by mass or less, more preferably 0.13 parts by mass or more and 0.5 parts by mass or less based on 100 parts by mass of the vinyl polymer (A) and other components.

### <Oxyalkylene polymer (C) having a hydrolyzable silyl group>

The oxyalkylene polymer (C) having a hydrolyzable silyl group in the present invention means a polymer of an oxyalkylene compound having a hydrolyzable silyl group on the end, which functions as a base resin in a sense. The oxyalkylene polymer (C) having a hydrolyzable silyl group is suitably added when tensile properties such as tensile strength and elongation ratios are insufficient when using only the vinyl polymer (A) in which part or all of the constituent monomer units are (meth)acrylic acid ester units, which vinyl polymer (A) has a hydrolyzable silyl group.

Examples of hydrolyzable silyl groups include, but are not particularly limited to, alkoxysilyl groups. Examples of alkoxysilyl groups include a trimethoxysilyl group, a methyldimethoxysilyl group, a dimethylmethoxysilyl group, a triethoxysilyl group, a methyldiethoxysilyl group, and a methyldimethoxyethoxysilyl group. In consideration of the balance between curing speed and flexibility, a trimethoxysilyl group or a methyldimethoxysilyl group is preferred.

Examples of polymers of an oxyalkylene compound include those containing a polyoxyalkylene skeleton in which a plurality of the following oxyalkylene units are repeated.
-(CH₂)n-O- (n is an integer of 1 to 10)
-CH₂CH(CH₃)-O-
-CH₂CH(C₂H₅)-O-
-CH₂C(CH₃)₂-O-
-CH₂CH(CH=CH₂)-O-

The polyoxyalkylene polymer may contain one or more of the above-described repeat units. Of these, a compound having a polyoxyalkylene unit of - CH₂CH(CH₃)-O- is preferred because it offers superior workability.

The oxyalkylene polymer having a hydrolyzable silyl group preferably has a hydrolyzable silyl group of 2 to 4 per molecule. When the oxyalkylene polymer contains more than four hydrolyzable silyl groups, the resulting composition may become hard, and when the oxyalkylene polymer contains less than two hydrolyzable silyl groups, the resulting composition may not be sufficiently cured.

The oxyalkylene polymer having a hydrolyzable silyl group preferably has a weight average molecular weight of 2,000 to 50,000 in terms of polystyrene as measured by GPC. When the weight average molecular weight is less than 2,000, flexibility may be insufficient when used as a sealing material, and when the weight average molecular weight is more than 50,000, the resulting composition has a high viscosity, causing poor workability when coating.

Specific examples of oxyalkylene polymers having a hydrolyzable silyl group include products called "MS polymer S202", "MS polymer S303", "Silyl SAT200", "Silyl SAT350", and "Silyl SAT30" available from Kaneka Corporation and products called "Excester ES2410", "Excester ES2410", and "Excester ES3430" available from Asahi Glass Co., Ltd.

The content of the oxyalkylene polymer (C) is not particularly limited, but preferably 0 parts by mass to 90 parts by mass based on 100 parts by mass of the total of the vinyl polymer (A) in which part or all of the constituent monomer units are (meth)acrylic acid ester units, which vinyl polymer (A) has a hydrolyzable silyl group, and the oxyalkylene polymer (C) having a hydrolyzable silyl group. When the content is more than 90 parts by mass, the weatherability may be deteriorated.

### <Polymer (D) containing a (meth)acrylic acid ester unit and having no hydrolyzable silyl group>

The polymer (D) containing a (meth)acrylic acid ester unit and having no hydrolyzable silyl group in the present invention may be added mainly as a plasticizer. The polymer (D) containing a (meth)acrylic acid ester unit can be prepared by polymerizing a (meth)acrylic acid ester monomer by any method. Specific examples of such methods include solution polymerization in an organic solvent, suspension polymerization, emulsion polymerization, and dispersion polymerization in an aqueous medium, dispersion polymerization in a nonaqueous medium, and bulk polymerization. In solution polymerization, living radical polymerization may also be employed. Of the above-described polymerization methods, bulk polymerization is more preferred. Although the polymerization temperature is not particularly limited, it is preferable to polymerize at a relatively high temperature of 150°C to 300°C as described in the above Means 4. Systems of production include a continuous system and a batch system, and although either one may be employed, a continuous system is preferred in consideration of improved productivity.

Specific examples of (meth)acrylic acid ester monomers include, but are not limited to: alkyl (meth)acrylate such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, neopentyl (meth)acrylate, 2-ethylhexyl (meth)acrylate, isodecyl (meth)acrylate, lauryl (meth)acrylate, tridecyl (meth)acrylate, and stearyl (meth)acrylate; alicyclic alkyl (meth)acrylate such as cyclohexyl (meth)acrylate, isobornyl (meth)acrylate, and tricyclodecynyl (meth)acrylate; hydroxylalkyl (meth)acrylate such as hydroxyethyl (meth)acrylate, hydroxybutyl (meth)acrylate, hydroxypropyl (meth)acrylate, and ε-caprolactone adduct of hydroxyethyl (meth)acrylate; and heteroatom-containing (meth)acrylic acid esters such as 2-methoxyethyl (meth)acrylate, dimethylaminoethyl (meth)acrylate, chloroethyl (meth)acrylate, trifluoroethyl (meth)acrylate, tetrahydrofurfuryl (meth)acrylate, and 3-(2H-1,2,3-benzotriazol-2-yl)-4-hydroxyphenethyl methacrylate. One or more of these may be polymerized.

A copolymerizable monomer other than (meth)acrylic acid ester may be copolymerized. Examples thereof include vinyl monomers such as styrene, α-methylstyrene, an α-olefin, a vinyl ester, and a vinyl ether.

The proportion of a (meth)acrylic acid ester monomer in the total monomers is preferably 50 parts by mass or more based on 100 parts by mass of the total monomers. When the proportion is less than 50 parts by mass, the weatherability may be deteriorated.

The polymer (D) has a weight molecular weight of preferably 1,000 to 20,000 in terms of polystyrene as measured by GPC. When the weight molecular weight is less than 1,000, the weatherability may be deteriorated, and when the weight molecular weight is more than 20,000, the composition has a high viscosity, causing poor workability when coating. The weight molecular weight is more preferably 1,500 to 8,000, further preferably 2,000 to 5,000. The polymer (D) has a viscosity of preferably 10,000 mPa·s or less at 25°C. When the viscosity is more than 10,000, workability may become poor when coating the composition.

Examples of polymer (D) containing a (meth)acrylic acid ester unit and having no hydrolyzable silyl group, which is an acrylic plasticizer, include "ARUFON UP-1000", "UP-1010", "UP-1020", "UP-1060", "UP-1080", "UP-1110", "UP-1180", "UH-2000", and "UH-2130" available from Toagosei Co., Ltd. ("ARUFON" is a registered trademark of Toagosei Co., Ltd.).

The content of the polymer (D) containing a (meth)acrylic acid ester unit and having no hydrolyzable silyl group is preferably 0 parts by mass to 200 parts by mass based on 100 parts by mass of the total of the vinyl polymer (A) having a hydrolyzable silyl group and the oxyalkylene polymer (C) having a hydrolyzable silyl group. When the content is more than 200 parts by mass, the tensile strength may decrease. The content is more preferably 10 parts by mass to 100 parts by mass.

### <Other components>

The curable composition may also contain a plasticizer, a filler, a curing catalyst, an adhesion imparting agent, a dehydrating agent, a light stabilizer, an ultraviolet absorber, an antioxidant, and a thixotropy-imparting agent in addition to the aforementioned components (A) to (D).

Examples of plasticizers include a polypropylene glycol plasticizer and a phthalic acid ester plasticizer in addition to the polymer (D) containing a (meth)acrylic acid ester unit and having no hydrolyzable silyl group, which polymer (D) functions as a plasticizer as described above. Commercially available polypropylene glycol plasticizer having a weight average molecular weight of 1,000 to 50,000 can be directly used as a polypropylene glycol plasticizer. The plasticizer has a weight average molecular weight of preferably 3,000 to 20,000. When the weight average molecular weight is less than 1,000, the weatherability may be insufficient, and when the weight average molecular weight is more than 50,000, the composition has a high viscosity, causing poor workability. Commercially available plasticizers called "Preminol 4010", " Preminol 5005", and " Preminol 3010" available from Asahi Glass Co., Ltd. and "Uniol D4000" and "Uniol TG4000" available from NOF Corporation may be used. Examples of phthalic acid ester plasticizers include dibutyl phthalate, dioctyl phthalate, diisononyl phthalate, diisoundecanyl phthalate, and diundecanyl phthalate.

Examples of fillers include light calcium carbonate having an average particle size of about 0.02 µm to 2.0 µm, heavy calcium carbonate having an average particle size of about 1.0 µm to 5.0 µm, titanium oxide, carbon black, synthetic silicic acid, talc, zeolite, mica, silica, fired clay, kaolin, bentonite, aluminum hydroxide, barium sulfate, glass balloon, silica balloon, and poly(methyl methacrylate) balloon. These fillers improve mechanical properties and increase strength and elongation. Of these, light calcium carbonate, heavy calcium carbonate, and titanium oxide, which are highly effective for improving properties, are preferably used. The filler is added in an amount of 50 parts by mass to 500 parts by mass based on 100 parts by mass of the total of the vinyl polymer (A) having a hydrolyzable silyl group and the oxyalkylene polymer (C) having a hydrolyzable silyl group. The filler is added in an amount of more preferably 75 parts by mass to 300 parts by mass. When the amount of the filler is too much or too small, mechanical properties of sealing materials may become poor.

Examples of curing catalysts include dibutyltin diacetylacetonate, dibutyltin dilaurate, dibutyltin diacetate, tin dioctanoate, dibutyltin diacetylacetonate, dioctyltin dilaurate, dibutyltin oxide, dibutyltin diversatate, and bismuth octylate.

Examples of adhesion imparting agents include aminosilane, epoxysilane, vinylsilane, and methylsilane. Examples of dehydrating agents include methyl orthoformate, methyl orthoacetate, and vinylsilane. Examples of light stabilizers include hindered amine compounds. Examples of ultraviolet absorbers include benzophenone compounds, benzotriazole compounds, and oxalic anilide compounds. Examples of thixotropy-imparting agents include amide wax compounds and silica compounds. Examples of antioxidants include hindered phenol compounds. An anti-aging agent and an organic solvent may also be added.

Examples of commercially available products of such additives, e.g., ultraviolet absorbers, include "Tinuvin 571", "Tinuvin 1130", and "Tinuvin 327" (trade names; available from Ciba Specialty Chemicals K.K.). Examples of light stabilizers include "Tinuvin 292", "Tinuvin 144", and "Tinuvin 123" (trade names; available from Ciba Specialty Chemicals K.K.) and "Sanol 770" (trade name; available from Sankyo Co., Ltd.). Examples of thermal stabilizers include "Irganox 1135", "Irganox 1520", and "Irganox 1330" (trade names; available from Ciba Specialty Chemicals K.K.). Also a mixture of ultraviolet absorber/light stabilizer/thermal stabilizer, "Tinuvin B75" (trade name; available from Ciba Specialty Chemicals K.K.), may also be used.

Examples of curing catalysts include "U28", "U100", "U200", "U220H", and "U303" (trade names; available from Nitto Kasei Co., Ltd.) and "SCAT-7", "SCAT-46A", and "No918" (trade names; available from Sankyo Organic Chemicals Co., Ltd.).

Examples of thixotropy-imparting agents include "Disparlon 3600N", "Disparlon 3800", "Disparlon 305", and "Disparlon 6500" (trade names; available from Kusumoto Chemicals, Ltd.).

In the following, the present invention is described in detail by means of Synthetic Examples and Examples.

### Examples

### <Synthetic Examples of vinyl polymer (A) in which part or all of the constituent monomer units are (meth)acrylic acid ester units, which vinyl polymer (A) has a hydrolyzable silyl group>

### [Synthetic Example 1]

A 2L flask equipped with a reflux condenser was charged with butyl acetate (937.5 g, 100 parts) and stirring was performed with maintaining the inner temperature at 100°C using an oil bath. Using a dropping funnel, a mixture of n-butyl acrylate (hereinafter BA)(664.5 g, 88.6 parts), methyl methacrylate (hereinafter MMA)(75 g, 10 parts), γ-methacryloxypropyltrimethoxysilane (hereinafter, MSi) (10.5 g, 1.4 parts) and 2,2'-azobis(2-methylbutyronitrile)(303 g, 4 parts) was added dropwise thereto over 4 hours. The mixture was further stirred for 2 hours with maintaining the temperature at 100°C. Thereafter a polymer (A1) having a hydrolyzable silyl group was prepared by desolvating the reaction solution using an evaporator at 90°C at 10 mmHg.

The resultant had a weight average molecular weight Mw of 9,700 and a number average molecular weight Mn of 4,800 in terms of polystyrene as measured by GPC using tetrahydrofuran as a solvent.

### [Synthetic Example 2]

The temperature of the jacket of a pressure stirred tank reactor having a capacity of 1,000 mL equipped with an electric heater was kept at 201°C. With maintaining the pressure of the reactor constant, a monomer mixture composed of methyl methacrylate (10 parts), butyl acrylate (85 parts), γ-methacryloxypropyltrimethoxysilane (5 parts), isopropyl alcohol (hereinafter IPA) (8 parts), trimethyl orthoacetate (hereinafter MOA) (4 parts), and di-tertiary-hexylperoxide ("Perhexyl D" described below) (0.2 part) as a polymerization initiator was started to be continuously fed to the reactor from a raw material tank at a constant feeding speed (48 g/minute, residence time: 12 minutes), and the reaction solution was continuously discharged from the outlet in an amount equivalent to the feeding amount of the monomer mixture. Although the reaction temperature was once decreased immediately after the start of the reaction and then increased due to the heat of polymerization, the temperature inside the reactor was kept at 196°C to 198°C by controlling the heater. The point of time when the temperature was stabilized after the start of feeding of the monomer mixture was regarded as the starting point of collecting the reaction solution, and as a result of continuing the reaction for 25 minutes, 1.2 kg of the monomer mixture was fed and 1.2 kg of the reaction solution was collected. Thereafter a polymer (A2) having a hydrolyzable silyl group was prepared by separating volatile components including unreacted monomers by introducing the reaction solution to a thin film evaporator.

As a result of GPC measurement, the polymer (A2) having a hydrolyzable silyl group had a weight average molecular weight Mw of 6,800 and a number average molecular weight Mn of 3,200.

### <Synthetic Examples of vinyl polymer (A) in which part or all of the constituent monomer units are (meth)acrylic acid ester units, which vinyl polymer (A) has a hydrolyzable silyl group and is different from the above, and Synthetic Example of compound (B') having a carboxyl group and having a molecular weight of 1,000 or more>

### [Synthetic Examples 3,4,5]

Vinyl polymers (A3), (A4) in which part or all are (meth)acrylic acid ester units, which vinyl polymers (A3), (A4) have a hydrolyzable silyl group, and a compound (B'1; Comparative Example) having a carboxyl group and having a molecular weight of 1,000 or more were prepared by the same procedure as in the above-described Synthetic Example 2 except for changing the temperature control and the composition of raw materials as described in Table 1. The values for each component in the table represent part(s) in terms of moles. "Perhexyl D" in the table means the trade name of di-tertiary-hexyl peroxide available from NOF Corporation, and "Perbutyl D" means the trade name of di-tertiary-butyl peroxide available from NOF Corporation.

**Table 1**

| | Synthetic Example 3 | Synthetic Example 4 | Synthetic Example 5 |
|---|---|---|---|
| | Polymer (A3) | Polymer (A4) | Polymer (B'1) |
| BA | 43.5 | 77 | 86 |
| 2-Ethylhexyl acrylate | 43.5 | | |
| MMA | 10 | 10 | |
| MSi | 3 | 13 | |
| Acrylic acid | | | 14 |
| IPA | 8 | | |
| MOA | 4 | 4 | |
| Methyl ethyl ketone | | 8 | 10 |
| Perhexyl D | 0.1 | 1 | |
| Perbutyl D | | | 1 |
| Jacket temperature (°C) | 182 | 225 | 235 |
| Temperature inside reactor (°C) | 185 | 228 | 234 |
| Weight average molecular weight Mw | 13000 | 3300 | 2000 |
| Number average molecular weight Mn | 4600 | 1700 | 1200 |

### <Preparation and evaluation of samples>

Next, curable resin compositions were produced as described below using the vinyl polymers (A1), (A2), (A3), and (A4) having a hydrolyzable silyl group prepared in the above-described Synthetic Examples 1, 2, 3, and 4 and the polymer (B'1) having a carboxyl group and having a molecular weight of 1,000 or more prepared in the above described Synthetic Example 5. Then, a test for curing speed was carried out.

More specifically, components were mixed in a composition shown in Tables 2 and 3 using a planetary mixer and the resultant was immediately packed in a cartridge to give a composition (curable resin composition).

Then, samples of an initial stage (immediately after compounding) and samples stored for one month under sealed conditions at 50°C were subjected to a tack free test (measurement of time required for the composition to be regarded as tack free when touched with fingers) in accordance with JIS A-1439. The results are shown in Tables 2 and 3.

In the tables, values for each component represent "% by mass" and values for tack free time represent "hour". Modified silicone in the tables was equivalent of the oxyalkylene polymer (C) having a hydrolyzable silyl group according to the present invention, and "Excester ES2420" available from Asahi Glass Co., Ltd. was used. The polymers (A1) to (A4), which were synthesized in the above-described Synthetic Examples 1 to 4, were equivalent of the vinyl polymer (A) in which part or all of the constituent monomer units are (meth)acrylic acid ester units and which has a hydrolyzable silyl group.

The polymer (B'1), which was synthesized in the above-described Synthetic Example 5, was equivalent of a polymer having a carboxyl group and having a molecular weight of 1,000 or more (see Comparative Example 7).

Acrylic plasticizers (D1) and (D2) were equivalent of the polymer (D) containing a (meth)acrylic acid ester unit and having no hydrolyzable silyl group. A product called "ARUFON UP-1000" available from Toagosei Co., Ltd. (weight average molecular weight Mw: 2,800, viscosity at 25°C: 1,000 mPa·s) was used as the acrylic plasticizer (D1), and a product called "ARUFON UP-1110" available from Toagosei Co., Ltd. (weight average molecular weight Mw: 2,400, viscosity at 25°C: 3,000 mPa·s) was used as the acrylic plasticizer (D2). As polypropylene glycol, a product called "D-2000" available from NOF Corporation was used. Specifically, in Example 13 and Comparative Example 9 in which the above polypropylene glycol was added, the acrylic plasticizer (D1) or (D2) was not added.

Calcium carbonate and titanium oxide were equivalent of a filler. A product called "HAKUENKA CCR" available from Shiraishi Calcium Kaisha, Ltd. was used as calcium carbonate, and a product called "Tipaque CR-97" available from Ishihara Sangyo Kaisha, Ltd. was used as titanium oxide.

A product called "SH-6020" available from Dow Coming Toray Co., Ltd. was used as an adhesion imparting agent.

Dibutyltin diacetylacetonate (a product called "Neostann U220H" available from Nitto Kasei Co., Ltd.) was used as a curing catalyst α, dibutyltin diacetate was used as a curing catalyst β, and dibutyltin dilaurate was used as a curing catalyst γ.

A product called "SZ-6300" available from Dow Coming Toray Co., Ltd. was used as a dehydrating agent.

Lauric acid, acetic acid, oleic acid, hydrogenated dimer acid, and octanoic acid were each equivalent of the compound (B) having a carboxyl group and having a molecular weight of 1,000 or less according to the present invention. In particular, a product called "Pripol 1009" available from Uniqema Inc. (molecular weight: about 560) was used as hydrogenated dimer acid.

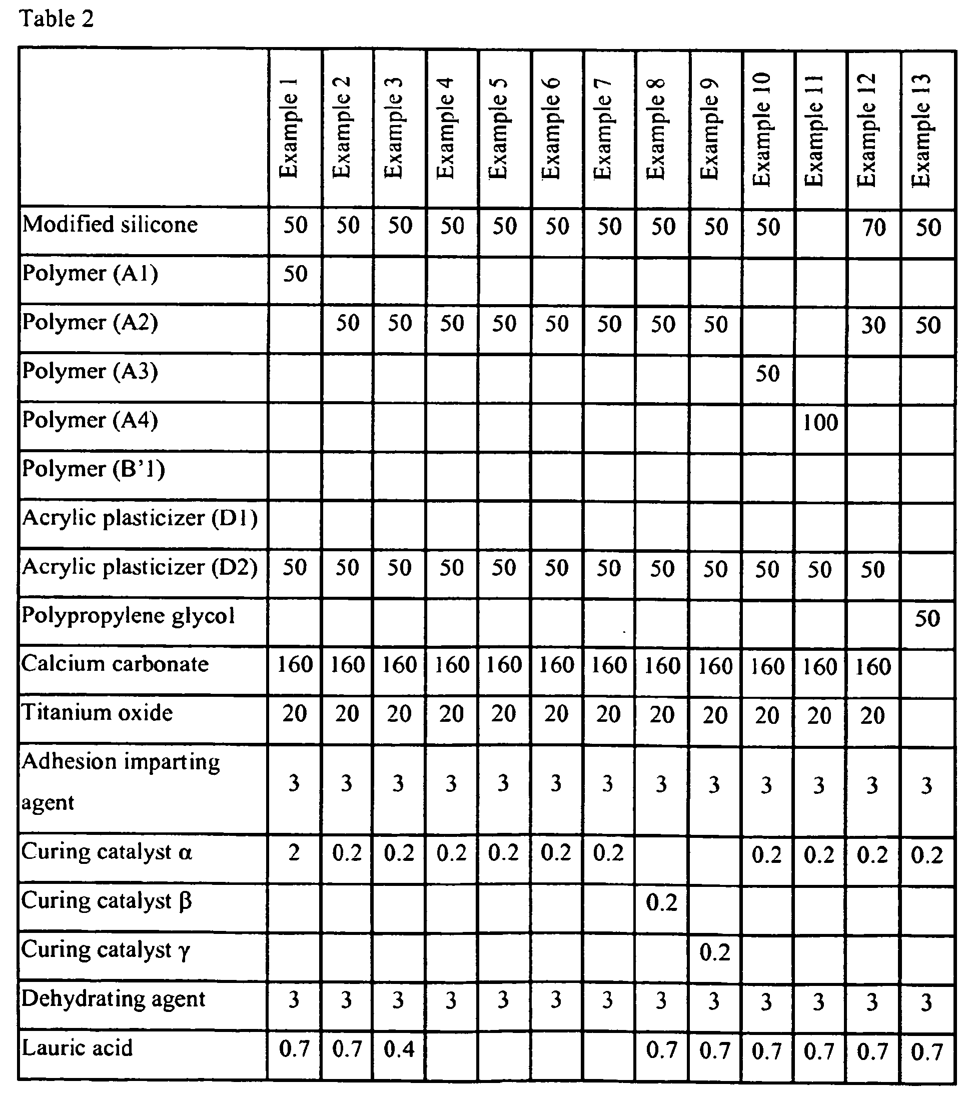

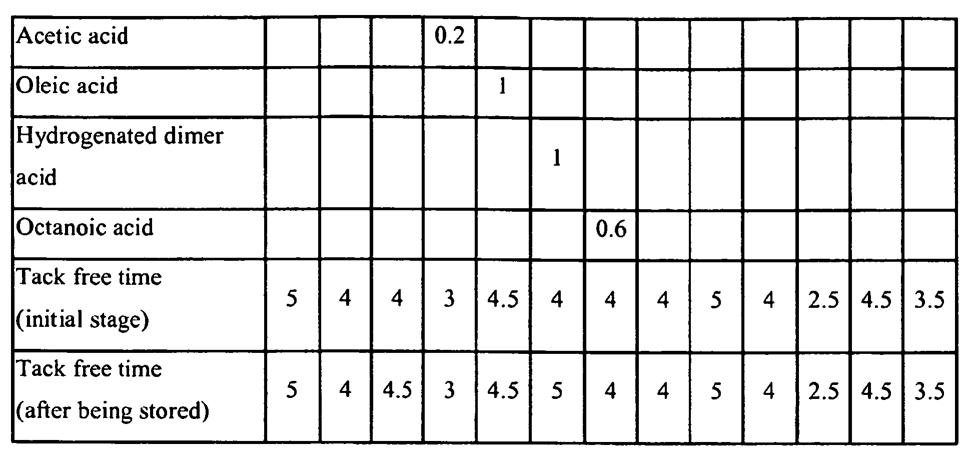

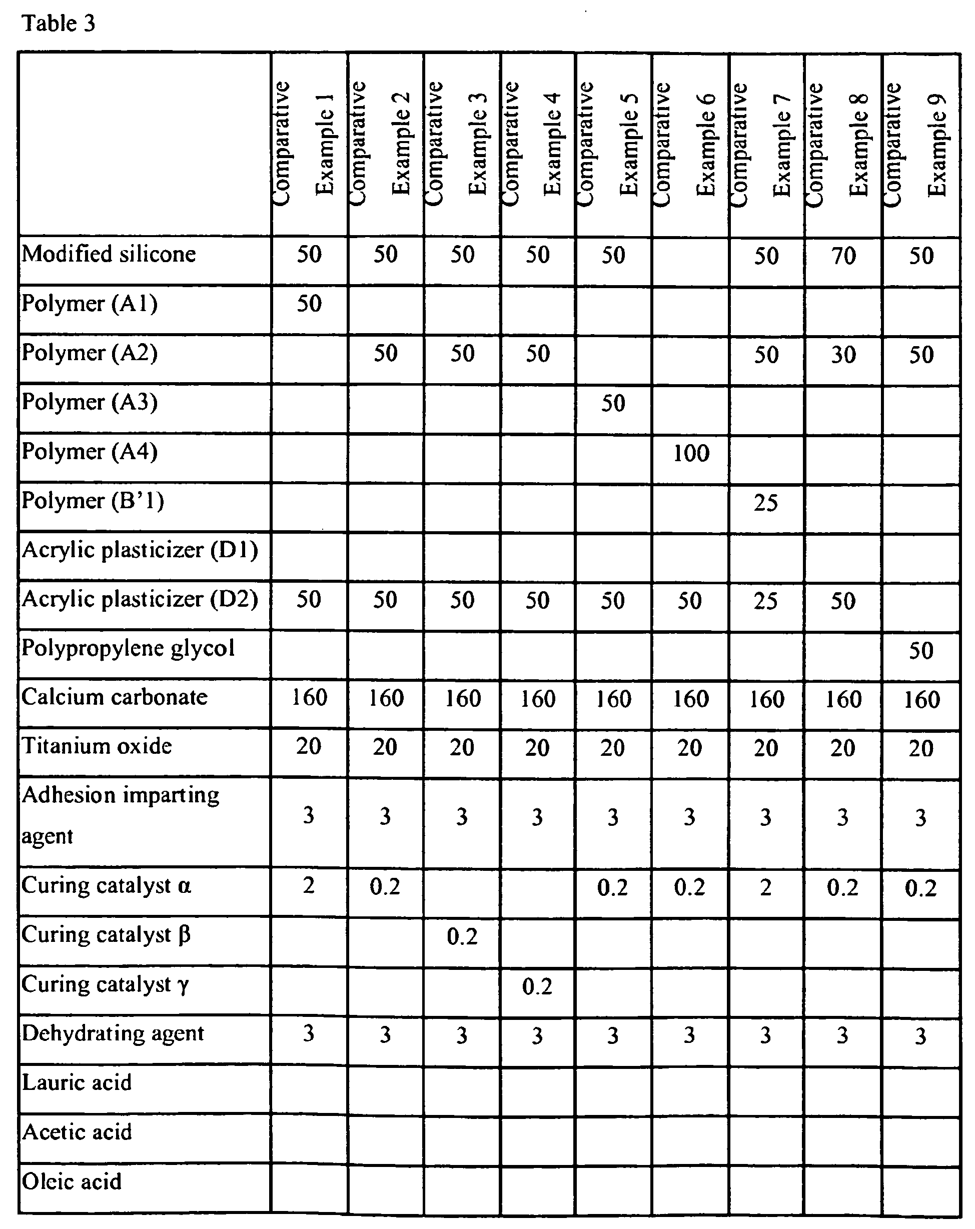

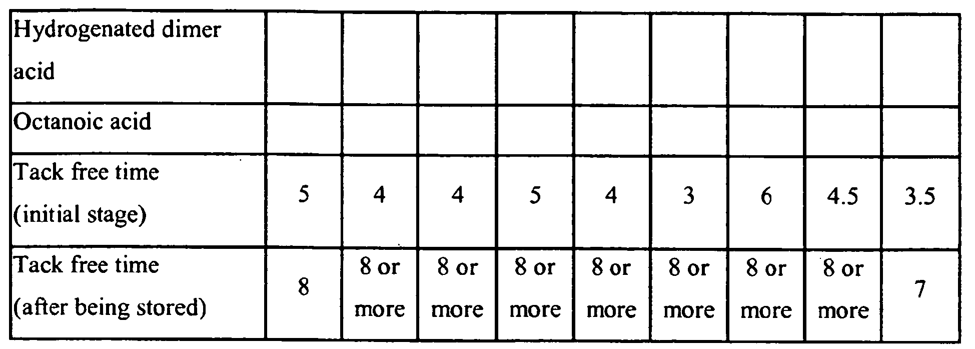

As shown in Tables 2 and 3, there was little difference in tack free times (time required for the composition to be regarded as tack free) between samples of initial stages (immediately after compounding) and samples stored for one month under sealed conditions at 50°C in Examples 1 to 13 containing the compound (B) having a carboxyl group and having a molecular weight of 1,000 or less. In other words, it has been proved that when the embodiment of the present invention is employed, the curing speed does not decrease even when used after being stored for long time, and a stable curing speed is maintained.

In contrast, it has been revealed that in Comparative Examples 1 to 9, which did not contain compound (B) having a carboxyl group and having a molecular weight of 1,000 or less, a significant difference occurred in tack free times (time required for the composition to be regarded as tack free) between samples of initial stages (immediately after compounding) and samples stored for one month under sealed conditions at 50°C. In other words, when stored for long time, the tack free time became long, i.e., the curing speed remarkably decreased. Moreover, even if a compound having a carboxyl group was contained, there was a difference in the tack free times when the compound had a molecular weight of more than 1,000 (see Comparative Example 7).

## Claims

1. A method of preparing a curable resin composition comprising, preparing a vinyl polymer (A) in which part or all of the constituent monomer units are (meth)acrylic acid ester units, which vinyl polymer (A) has a hydrolyzable silyl group, by polymerizing at least a (meth)acrylic acid ester monomer at a temperature of 150 °C to 300 °C; and mixing the vinyl polymer (A) and a compound (B) having a carboxyl group and having a molecular weight of 1,000 or less.

2. The method according to claim 1, wherein the vinyl polymer (A), the compound (B) and an oxyalkylene polymer (C) having a hydrolyzable silyl group are mixed.

3. The method according to claim 1, wherein the vinyl polymer (A), the compound (B), an oxyalkylene polymer (C) having a hydrolyzable silyl group and a polymer (D) containing a (meth)acrylic acid ester unit and having no hydrolyzable silyl group are mixed.

4. The method according to claim 3, further comprising preparing the polymer (D) by polymerizing at least a (meth)acrylic acid ester monomer at a temperature of 150°C to 300 °C.

5. The method according to any one of claims 1 to 4, wherein the compound (B) has a molecular weight of 150 or more.

6. The method according to any one of claims I to 5, wherein the curable resin composition contains a curing catalyst selected from the group consisting of dibutyltin diacetylacetonate, dibutyltin dilaurate, dibutyltin diacetate, tin dioctanoate, dioctyltin dilaurate, dibutyltin oxide, dibutyltin diversatate, and bismuth octylate.

## Patentansprüche

1. Verfahren zur Herstellung einer härtbaren Harzzusammensetzung umfassend, Herstellen eines Vinylpolymers (A), in dem ein Teil oder alle der konstituierenden Monomereinheiten (Meth)Acrylsäure-Ester-Einheiten sind, wobei dieses Vinylpolymer (A) eine hydrolisierbare Silylgruppe hat, durch Polymerisieren von mindestens einem (Meth)Acrylsäure-Ester-Monomer bei einer Temperatur von 150°C bis 300°C; und Mischen des Vinylpolymers (A) und einer Verbindung (B), die eine Carboxylgruppe und ein Molekulargewicht von 1.000 oder weniger hat.

2. Verfahren gemäß Anspruch 1, wobei das Vinylpolymer (A), die Verbindung (B) und ein Oxyalkylenpolymer (C), das eine hydrolisierbare Silylgruppe hat, gemischt werden.

3. Verfahren gemäß Anspruch 1, wobei das Vinylpolymer (A), die Verbindung (B), ein Oxyalkylenpolymer (C), das eine hydrolisierbare Silylgruppe hat, und ein Polymer (D), das eine (Meth)Acrylsäure-Ester-Einheit enthält und keine hydrolysierbare Silylgruppe aufweist, gemischt werden.

4. Verfahren gemäß Anspruch 3, weiterhin umfassend das Herstellen des Polymers (D) durch Polymerisieren von mindestens einem (Meth)Acrylsäure-Ester-Monomer bei einer Temperatur von 150 °C bis 300 °C.

5. Verfahren gemäß einem der Ansprüche 1 bis 4, wobei die Verbindung (B) ein Molekulargewicht von 150 oder mehr hat.

6. Verfahren gemäß einem der Ansprüche 1 bis 5, wobei die härtbare Harzzusammensetzung einen Härtungskatalysator enthält, ausgewählt aus der Gruppe bestehend aus Dibutylzinndiacetylacetonat, Dibutylzinndilaurat, Dibutylzinndiacetat, Zinndioctoat, Dioctylzinndilaurat, Dibutylzinnoxid, Dibutylzinndiversatat und Wismutoctylat.

## Revendications

1. Procédé d'élaboration d'une composition de résine durcissable comportant l'élaboration d'un polymère vinylique (A) dans lequel tout ou partie des unités monomères constitutives sont des unités d'ester d'acide (méth)acrylique, lequel polymère vinylique (A) comprend un groupe silyle hydrolysable, par polymérisation d'au moins un monomère d'ester d'acide (méth)acrylique à une température de 150 °C à 300 °C ; et le mélange du polymère vinylique (A) et d'un composé (B) comprenant un groupe carboxyle et ayant un poids moléculaire de 1 000 ou moins.

2. Le procédé selon la revendication 1, où le polymère vinylique (A), le composé (B) et un polymère d'oxyalkylène (C) comprenant un groupe silyle hydrolysable sont mélangés.

3. Le procédé selon la revendication 1, où le polymère vinylique (A), le composé (B), un polymère d'oxyalkylène (C) comprenant un groupe silyle hydrolysable et un polymère (D) contenant une unité d'ester d'acide (méth)acrylique et ne comprenant pas de groupe silyle hydrolysable sont mélangés.

4. Le procédé selon la revendication 3, comprenant en outre l'élaboration du polymère (D) par polymérisation d'au moins un monomère d'ester d'acide (méth)acrylique à une température de 150 °C à 300 °C.

5. Le procédé selon l'une quelconque des revendications 1 à 4, où le composé (B) a un poids moléculaire de 150 ou plus.

6. Le procédé selon l'une quelconque des revendications 1 à 5, où la composition de résine durcissable contient un catalyseur durcisseur sélectionné dans le groupe constitué du diacétylacétonate de dibutyl-étain, du dilaurate de dibutyl-étain, du diacétate de dibutyl-étain, du dioctanoate d'étain, du dilaurate de dioctyl-étain, de l'oxyde de dibutyl-étain, du diversatate de dibutyl-étain, et de l'octylate de bismuth.
